# FASCICULE DE BREVET EUROPEEN

(11) **EP 0 645 938 B1**
(45) Date de publication et mention de la délivrance du brevet: **20.01.1999**
(21) Numéro de dépôt: 94402135.1
(22) Date de dépôt: 26.09.1994
(51) Int. Cl.: H04Q 1/14, H01R 13/703, H01R 29/00, H01H 27/04

(54) **Réglette de connexion à coupure intégrée**
Anschlussleiste mit integrierter Trennung
Terminal block with integrated disconnection

(30) Priorité: 28.09.1993 FR 9311506
(43) Date de publication de la demande: 29.03.1995
(73) Titulaire: ALCATEL ALSTHOM COMPAGNIE GENERALE D'ELECTRICITE, 75382 Paris Cédex 08 (FR)
(72) Inventeur: Audeval, Fabrice, F-08000 Charleville Mezieres (FR); Jacques, Didier, F-08000 Lafrancheville (FR)
(74) Mandataire: Buffière, Michelle

(56) Documents cités:
- EP-A- 0 180 000
- AT-A- 310 585

## Description

La présente invention se rapporte aux dispositifs assurant la connexion de conducteurs dits d'entrée à des conducteurs dits de sortie et permettant la coupure des connexions réalisées sans déconnecter les conducteurs. Elle porte plus particulièrement sur une réglette de connexion à coupure intégrée.

Une telle réglette est utilisée notamment pour interconnecter des lignes téléphoniques d'entrée et de sortie. Elle comporte, de manière connue, au moins une rangée de paires de contacts dits d'entrée et une rangée associée de paires de contacts dits de sortie, dont les contacts sont retenus en vis-à-vis dans un corps isolant et chaque paire de contacts d'entrée et la paire correspondante de contacts de sortie sont séparées par un puits de coupure défini entre elles dans le corps. Ces contacts ont une partie terminale autodénudante accessible sur une face avant du corps pour le raccordement des conducteurs des lignes d'entrée ou de sortie à chacun d'eux. Ils ont leur partie terminale opposée saillante dans une partie dite arrière du puits correspondant, ces parties terminales de deux contacts en vis-à-vis étant en pression élastique l'une contre l'autre et étant dites de liaison élastique de ces deux contacts. Une languette isolante de coupure, extérieure à la réglette, est insérée à souhait dans chaque puits depuis la face avant de la réglette pour écarter les unes des autres les parties terminales de liaison élastique des paires de contacts d'entrée et de sortie concernées.

Le document FR-A-2 662 042 décrit un dispositif de connexion de lignes téléphoniques d'entrée et de sortie, comportant une réglette de connexion à coupure intégrée et des modules de protection enfichables dans la réglette. Cette réglette de connexion comporte en outre des nervures ou excroissances isolantes sur le corps, qui écartent et séparent les parties terminales de liaison élastique de chaque contact d'entrée et du contact de sortie en vis-à-vis, pour l'isolement des lignes d'entrée et des lignes de sortie lorsque les modules de protection ne sont pas enfichés dans la réglette. Chaque module de protection présente deux pattes dites de ligne, qui sont enfichées dans l'un des puits et reçues entre les parties terminales de liaison de la paire de contacts d'entrée et de la paire de contacts de sortie concernées, en les reliant les unes aux autres et servant ainsi de partie active de contacteur entre elles.

La présente invention a pour but de réaliser une réglette de connexion à coupure intégrée dans laquelle les conducteurs d'entrée ou lignes d'entrée et les conducteurs de sortie ou lignes de sortie peuvent être interconnectés ou isolés les uns des autres indépendamment de la présence sur la réglette ou du retrait de tels modules de protection enfichables, en répondant ainsi non pas aux conditions sévères et moins fréquentes d'utilisation du dispositif connu précité de connexion à coupure intégrée mais à celles des réglettes courantes connues de connexion à coupure non intégrée.

La présente invention a pour objet une réglette de connexion à coupure intégrée, comportant des contacts dits d'entrée et de sortie, retenus dans un corps isolant et ayant chacun d'une part une première partie terminale accessible extérieurement sur ledit corps et d'autre part une deuxième partie terminale intérieure audit corps et dite de liaison élastique de chaque contact d'entrée à l'un des contacts de sortie, et des moyens de coupure interposables entre les parties terminales de liaison des contacts d'entrée et de sortie, caractérisée en ce que lesdits moyens de coupure sont constitués par des cales isolantes de coupure, montées prisonnières et mobiles dans ledit corps et actionnées depuis l'extérieur dudit corps entre une position de coupure, pour laquelle chaque cale écarte et isole les parties terminales de liaison desdits contacts d'entrée et de sortie concernés, et une position de non coupure, pour laquelle chaque cale est rétractée relativement aux parties terminales des contacts d'entrée et de sortie concernés et est sans effet sur elles.

Cette réglette présente avantageusement en outre au moins l'une des caractéristiques additionnelles suivantes:
- ledit corps, dans lequel les contacts d'entrée et de sortie sont en vis-à-vis et en deux rangées parallèles et sont accessibles sur une face avant du corps, est formé de deux parties respectivement arrière et avant, assemblées l'une à l'autre et dites, pour celle avant, barrette de connexion, retenant lesdits contacts d'entrée et de sortie et ayant une face arrière de jonction ouverte et sur laquelle les parties terminales de liaison des contacts sont saillantes, et, pour celle arrière, barrette de coupure, ayant une face avant de jonction ouverte, recevant lesdites parties terminales de liaison des contacts, contenant lesdites cales de coupure et présentant des fentes en vis-à-vis, ouvertes sur la face avant de jonction de la barrette de coupure et fermées par la barrette de connexion assemblée sur elle, dites de guidage desdites cales de coupure,
- lesdites cales sont dites doubles et affectées chacune à une paire de contacts d'entrée et à la paire de contacts de sortie en vis-à-vis et comportent chacune deux bras de coupure, portés par un support et saillants de part et d'autre dudit support, et en ce que lesdites fentes de guidage sont centrées entre les deux contacts des différentes paires de contacts en vis-à-vis.
- chaque cale de coupure comporte un bras d'actionnement, prévu sur ledit support et reçu dans chacune des fentes de guidage en vis-à-vis.
- le bras d'actionnement est saillant extérieurement sur la barrette de coupure,
- les cales de coupure sont reliées les unes aux autres par un bras de couplage accessible extérieurement sur la barrette de coupure.

Les caractéristiques et avantages de la présente invention ressortiront de la description faite ci-après d'un exemple de réalisation illustré dans les dessins ci-annexés. Dans ces dessins:
- Les figures 1 et 2 sont deux vues en perspective d'une réglette de connexion selon l'invention, la figure 1 la représentant en éclaté,
- la figure 3 est une vue en perspective à échelle agrandie de l'un des éléments dit cale de coupure de la réglette des figures 1 et 2,
- les figures 4 à 6 sont des vues en coupe de la réglette, illustrant son fonctionnement.

La réglette de connexion est décrite ci-après en la considérant dans les conditions les plus courantes d'utilisation, pour laquelle elle se monte sur une fixation verticale (mur ou rail) et est alors horizontale et face à un opérateur ou utilisateur. Bien entendu elle peut avoir une orientation différente.

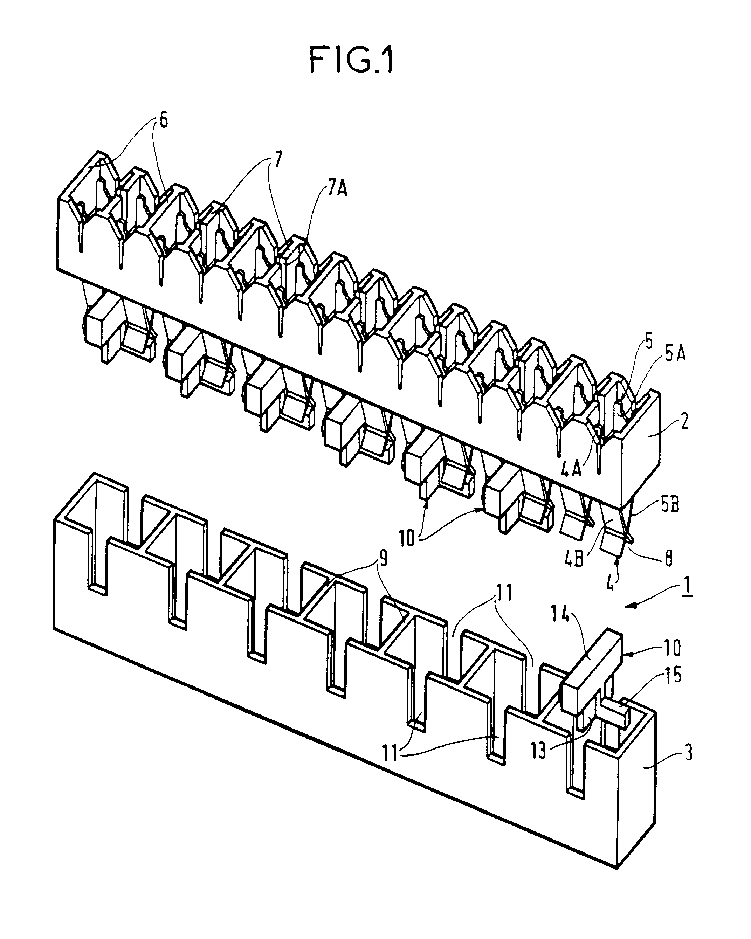

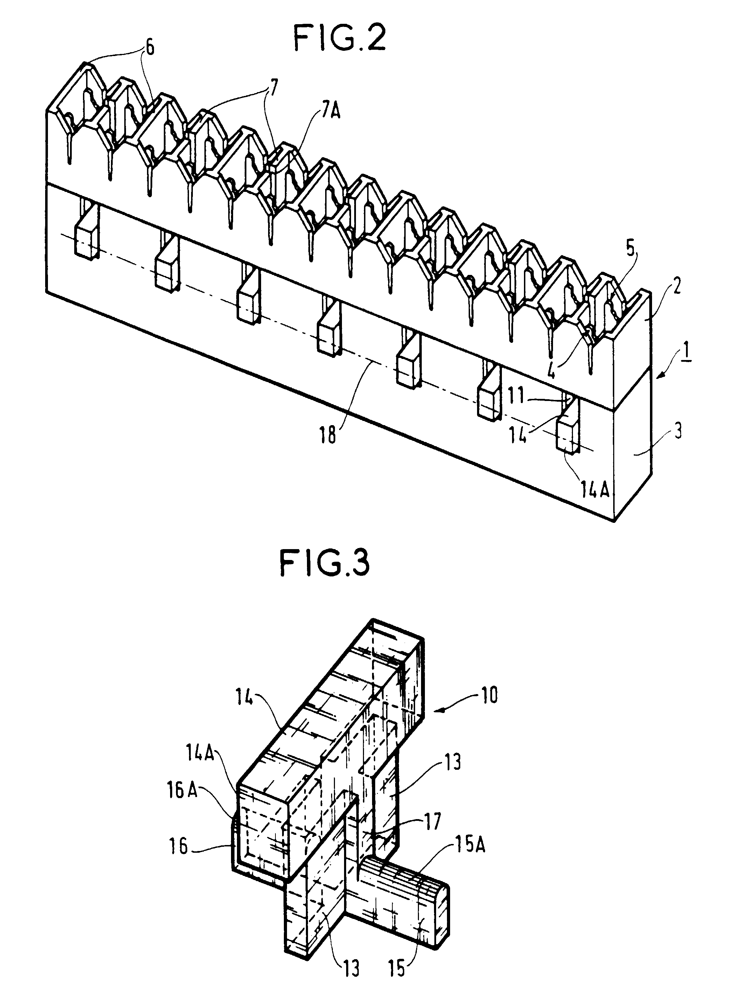

En se référant aux figures 1 et 2, on voit que la réglette de connexion comporte un corps isolant allongé 1, formé de deux parties assemblées l'une à l'autre, l'une avant et dite barrette de connexion 2 et l'autre arrière et dite barrette de coupure 3. Ces barrettes 2 et 3 sont assemblées aux ultra-sons ou en variante par encliquetage en étant alors équipées à cet effet de dispositions convenables non représentées. Elles communiquent directement l'une avec l'autre à leur jonction.

Cette réglette est dite de base dans la mesure où elle comporte une seule rangée de contacts dits d'entrée 4 et une rangée correspondante de contacts dits de sortie 5. Les contacts 4 et 5 sont identiques et plats. Ils sont disposés en vis-à-vis, d'une rangée à l'autre. Ils sont montés côte à côte dans la barrette de connexion, le long de ses deux faces inférieure et supérieure. Ils sont retenus dans des cloisons transversales, notées alternativement 6 et 7, qui les séparent les uns des autres le long de la barrette de connexion. Les cloisons 6 sont celles terminales et sont alternées avec les cloisons 7. Elles définissent entre elles des compartiments doubles pour chaque paire de contacts d'entrée et la paire correspondante de contacts de sortie. Les cloisons 7 ont chacune une fente médiane 7A, parallèle aux faces supérieure et inférieure de la barrette 2.

Ces contacts 4 et 5 sont accessibles en face avant de la barrette de connexion 2 et sont largement saillants à l'arrière de cette barrette de connexion dans la barrette de coupure. Ils ont chacun une fourche autodénudante avant 4A ou 5A, selon le contact 4 ou 5, de raccordement de l'un des deux conducteurs d'une ligne d'entrée ou de sortie au contact considéré. Ils ont leur partie terminale opposée 4B ou 5B, dite partie de liaison élastique de deux contacts en vis-à-vis, qui est arquée et pliée en étant saillante vers le plan médian de la barrette de connexion, pour cette liaison élastique à pression des contacts de l'une des rangées à ceux de l'autre rangée.

Ces parties terminales de liaison 4B et 5B définissent entre elles un Vé arrière terminal 8, au delà de la zone de liaison élastique des parties de liaison 4B et 5B de chaque contact d'entrée et du contact correspondant de sortie.

La barrette de coupure 3 est ouverte sur sa face de jonction à la barrette de connexion 2 et est par ailleurs fermée à l'arrière. Elle est compartimentée intérieurement par une série de cloisons transversales 9, qui sont au pas des cloisons 6 de la barrette de connexion. Elle contient intérieurement une série de cales isolantes de coupure 10, chacune dite double et montée dans l'un des compartiments définis entre les cloisons successives 9. Ces cales sont mobiles dans la barrette de coupure, présentant à cet effet des fentes 11 en vis-à-vis sur ses parois inférieure et supérieure. Chacune des fentes 11 est ouverte à l'avant et centrée entre deux cloisons 9 successives. Les fentes en vis-à-vis guident les différentes cales de coupure et définissent leur course entre une position dite arrière, de non coupure des lignes d'entrée et de sortie raccordées aux contacts d'entrée et de sortie des paires en vis-à-vis, et une position dite avant de coupure de ces mêmes lignes d'entrée et de sortie.

Ces cales de coupure 10 sont identiques et décrites en se référant en outre et plus particulièrement à la figure 3 et en considérant leurs conditions de montage dans la barrette de coupure 3.

Chaque cale de coupure comporte un support 13, portant un bras d'actionnement 14 et deux bras de coupure 15 et 16. Le support 11 est monté transversalement dans la barrette de coupure, entre deux cloisons successives 9.

Le bras d'actionnement 14 est défini sur un bord dit avant du support 13. Il est plus épais que le support et est saillant sur les bords dits supérieur et inférieur de ce support, pour être reçu dans deux fentes en vis-à-vis de guidage 11. Au moins l'une de ses deux extrémités 14A est saillante au delà de la fente, sur l'extérieur de la barrette de coupure. Cette extrémité 14A saillante extérieurement sur la barrette de coupure constitue à proprement parler le bras d'actionnement extérieur de la cale de coupure intérieure. Dans la réalisation illustrée cette seule extrémité saillante extérieurement 14A est saillante sur la face inférieure de la réglette de connexion.

La largeur du bras d'actionnement correspond sensiblement à la largeur des fentes 11 et à l'écartement entre les parties terminales arrière 4B ou 5B des contacts 4 ou 5. La dimension du support 13, prise entre ses bords inférieur et supérieur, correspond sensiblement à la dimension transversale intérieure de la barrette de coupure 3.

Les bras de coupure 15 et 16 sont identiques l'un à l'autre. Ils sont transversaux au support 13 et au bras d'actionnement et centrés sur la partie arrière du support, d'où ils s'étendent d'un côté et de l'autre de ce support. Leur facette dite avant 15A ou 16A, sensiblement à mi-niveau du support, est arrondie ou en variante de section triangulaire, pour des facilités d'insertion entre les parties terminales de liaison des contacts 4 et 5, depuis le Vé terminal arrière 8 défini entre elles.

Pour des raisons de rigidité suffisante et de guidage convenable de la cale de coupure 10, chaque bras de coupure est formé sur la partie terminale arrière d'une nervure médiane 17 sur le support 13, qui couple le bras d'actionnement à l'un des bras de coupure, sur chaque face du support.

Dans la réalisation selon les figures 1 et 2, les cales de coupure 10 sont actionnées individuellement à la main. En variante, ainsi que schématisé en pointillés par un axe de couplage, dans la figure 2, les cales de coupure 10 peuvent être couplées les unes aux autres sur l'extérieur de la barrette de coupure 3, par un bras de couplage 18 reliant les extrémités 14A des bras d'actionnement 14. Dans une autre variante non représentée, elles peuvent être couplées les unes aux autres à l'intérieur de la barrette de coupure, par un bras de couplage arrière qui relie leurs bras de coupure et est alors saillant sur l'une et ou l'autre des extrémités de la barrette de coupure. Dans cette autre variante, les bras d'actionnement 14 précités, qui sont reçus dans les fentes de guidage 11, ne sont plus saillants extérieurement et jouent alors simplement un rôle de guidage dans ces fentes et entre les contacts 4 ou 5. Le bras de couplage extérieur ou intérieur et alors saillant extérieurement peut être actionné à la main ou par une commande automatisée, telle qu'un vérin.

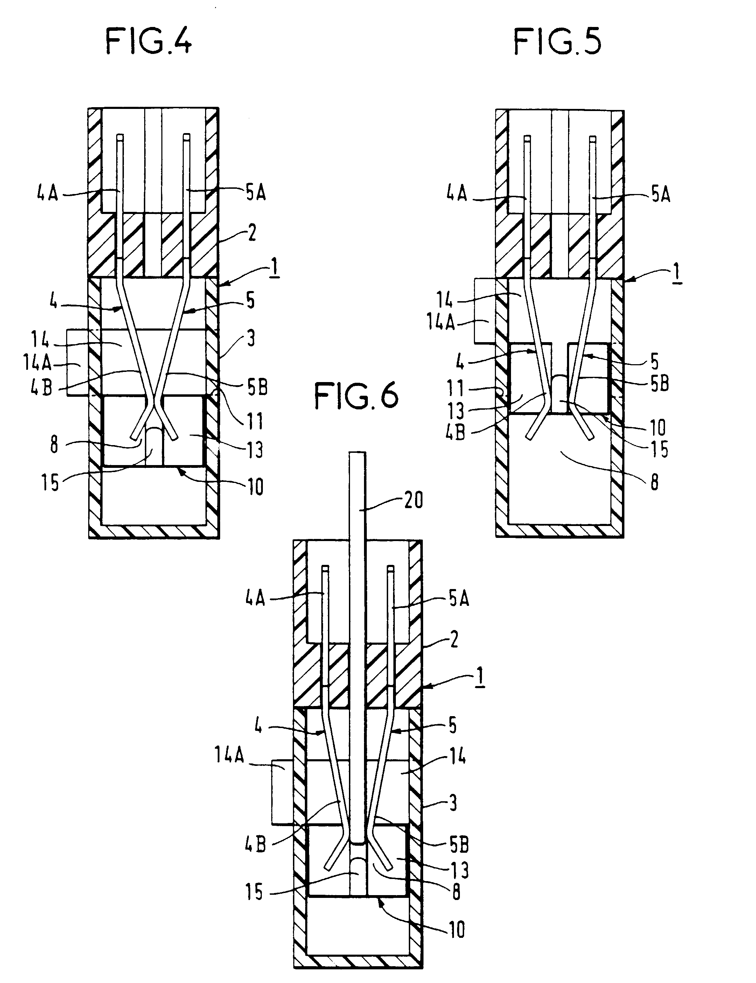

Les figures 4 et 5 montrent le fonctionnement de la réglette de connexion à coupure intégrée.

Pour la position arrière de la cale de coupure 10, qui est celle illustrée dans la figure 4 et est obtenue lors de la butée de son bras d'actionnement 14 sur le fond des fentes 11, chacun des deux bras de coupure tels que 15 est à peine engagé dans le Vé terminal arrière 8 défini entre les deux contacts 4 et 5 correspondants. Les deux bras de coupure sont alors sans effet sur les deux paires de contacts 4 et 5 concernés, qui restent reliés élastiquement les uns aux autres.

Pour la position avant de la cale de coupure 10, qui est celle illustrée dans la figure 5 et est obtenue lors de la butée de son bras d'actionnement 14 sur le bout des fentes 11 fermées pour la barrette de connexion 2, les bras de coupure tels que 15 sont engagés entre les parties terminales de liaison 4B et 5B des deux paires concernées de contacts 4 et 5 et les écartent les unes des autres en isolant chacun des deux contacts 4 du contact 5 en vis-à-vis.

La figure 6 montre en outre que cette réglette de connexion à coupure intégrée peut en outre recevoir par sa face avant une carte de circuit imprimé 20, enfichée entre deux paires de contacts 4 et 5. Une telle carte 20 peut être à souhait une carte de test ou une carte appartenant à un module de protection des lignes raccordées. Elle assure avec son enfichage à fond entre les paires de contacts 4 et 5 la mise en position arrière de la cale de coupure 10 prévue pour ces deux paires de contacts.

Bien entendu l'invention n'est pas limitée à l'exemple de réalisation illustré ou résultant des variantes indiquées ci-avant. En particulier, les cales de coupure peuvent être simples et montées accolées deux à deux, bien que la réalisation d'une cale de coupure double soit préférentielle. La partie dite barrette de connexion peut être réalisée sous une autre forme à laquelle est adaptée la forme de la barrette de coupure qui lui est associée.

## Revendications

1. Réglette de connexion à coupure intégrée, comportant des contacts dits d'entrée et de sortie (4,5), retenus dans un corps isolant (1) et ayant chacun d'une part une première partie terminale (4A,5A) accessible extérieurement sur ledit corps et d'autre part une deuxième partie terminale (4B,5B) intérieure audit corps et dite de liaison élastique de chaque contact d'entrée à l'un des contacts de sortie, et des moyens de coupure (10) interposables entre les parties terminales de liaison des contacts d'entrée et de sortie, caractérisée en ce que lesdits moyens de coupure (10) sont constitués par des cales isolantes de coupure, montées prisonnières et mobiles dans ledit corps (1) et actionnées depuis l'extérieur dudit corps entre une position de coupure, pour laquelle chaque cale écarte et isole les parties terminales de liaison (4B, 5B) desdits contacts d'entrée et de sortie concernés (4, 5), et une position de non coupure, pour laquelle chaque cale est rétractée relativement aux parties terminales des contacts d'entrée et de sortie concernés et est sans effet sur elles.

2. Réglette selon la revendication 1, dans laquelle lesdits contacts d'entrée et de sortie sont en vis-à-vis les uns des autres et disposés en deux rangées parallèles et ont leur première partie terminale accessible sur une face dite avant dudit corps, caractérisée en ce que ledit corps (1) est formé de deux parties respectivement avant et arrière (2, 3) assemblées l'une à l'autre et dites, pour celle avant, barrette de connexion (2), retenant lesdits contacts d'entrée et de sortie et ayant une face arrière de jonction ouverte et sur laquelle les parties terminales de liaison des contacts sont saillantes, et, pour celle arrière, barrette de coupure (3), ayant une face avant de jonction ouverte, recevant lesdites parties terminales de liaison des contacts, contenant lesdites cales de coupure (10) et présentant des fentes en vis-à-vis (11), ces fentes étant ouvertes sur la face avant de jonction de la barrette de coupure et fermées par la barrette de connexion assemblée sur elle et étant affectées au guidage desdites cales de coupure (10).

3. Réglette selon la revendication 2, caractérisée en ce que lesdites cales de coupure (10) sont dites doubles sont affectées chacune à une paire de contacts d'entrée (4) et à la paire de contacts de sortie (5) en vis-à-vis et comportent chacune deux bras de coupure (15, 16), portés par un support (13) et saillants de part et d'autre dudit support, et en ce que lesdites fentes de guidage (11) sont centrées entre les deux contacts des différentes paires de contacts en vis-à-vis.

4. Réglette selon la revendication 3, caractérisée en ce que chaque cale de coupure (10) comporte un bras d'actionnement (14), prévu sur ledit support (13) et reçu dans chacune des fentes de guidage (11) en vis-à-vis.

5. Réglette selon la revendication 4, caractérisée en ce que le bras d'actionnement (14) de chacune desdites cales de coupure (10) est saillant sur la barrette de coupure (3), au moins d'un côté de celle-ci.

6. Réglette selon l'une des revendications 4 et 5, caractérisée en ce que ledit bras d'actionnement (14) s'étend le long d'un bord dit avant dudit support (13), pour chaque cale de coupure (10) considérée dans ladite barrette de coupure, et est saillant de part et d'autre dudit support, transversalement audit bord avant de celui-ci, en présentant une dimension transversale dite largeur sensiblement égale à l'écart entre les contacts de chaque paire.

7. Réglette selon l'une des revendications 4 à 6, caractérisée en ce qu'elle comporte en outre un bras de couplage (18), reliant lesdites cales de coupure (10) les unes aux autres, et s'étendant au moins partiellement sur l'extérieur de la barrette de coupure (3), pour une commande simultanée desdites cales de coupure.

8. Réglette selon l'une des revendications 3 à 7, caractérisée en ce que lesdits bras de coupure (15, 16) sont dits arrière sur ledit support (13), pour chaque cale de coupure (10) considérée dans ladite barrette de coupure, et présentent chacun une facette dite avant (15A, 16A), ayant une forme adaptée à leur insertion entre et le long des parties terminales (4B, 5B) de liaison desdits contacts (4, 5).

## Patentansprüche

1. Anschlußleiste mit integrierter Trennung, mit sogenannten Eingangs- und Ausgangskontakten (4, 5), die in einem isolierenden Körper (1) gehalten sind und jeweils einerseits einen ersten Abschlußbereich (4A, 5A), der von Außen an dem Körper zugänglich ist, und andererseits einen zweiten Abschlußbereich (4B, 5B) innerhalb des Körpers als elastische Verbindung jedes Eingangskontakts mit einem der Ausgangskontakte aufweisen, mit Trennmitteln (10), die zwischen den Verbindungs-Abschlußbereichen der Eingangs- und Ausgangskontakte anordenbar sind, **dadurch gekennzeichnet**, daß die Trennmittel (10) durch isolierende Trennkeile gebildet sind, die in dem Körper (1) gefangen und beweglich montiert sind und von außerhalb des Körpers zwischen einer Trennposition, für die jeder Keil die Verbindungs-Abschlußbereiche (4B, 5B) der betreffenden Eingangs- und Ausgangskontakte (4, 5) beabstandet und isoliert, und einer Nichttrennungsposition betätigt werden, für die jeder Keil relativ zu den Abschlußbereichen der betreffenden Eingangs- und Ausgangskontakte zurückgezogen ist und keine Wirkung auf sie hat.

2. Leiste nach Anspruch 1, bei der die Eingangs- und Ausgangskontakte einander gegenüberliegend in zwei parallelen Reihen angeordnet sind, wobei ihr erster Abechlußbereich an einer als Vorderseite bezeichneten Seite des Körpers zugänglich ist, dadurch gekennzeichnet, daß der Körper (1) aus einem vorderen und einem hinteren Bereich (2, 3) gebildet ist, die zusammengefügt sind, wobei der vordere, als Verbindungsstab (2) bezeichnet, die Eingangs- und Ausgangskontakte hält und eine offene Anschlußrückseite hat, an der die Verbindungs-Abschlußbereiche der Kontakte vorstehen, und der hintere, als Trennstab (3) bezeichnet, eine offene Anschlußvorderseite hat, wwelche die Verbindungs-Abschlußbereiche der Kontakte aufnimmt, die Trennkeile (10) enthält und gegenüberliegende Schlitze (11) aufweist, wobei die Schlitze an der Anschlußvorderseite des Trennstabs offen und durch den daran angefügten Verbindungsstab verschlossen sind und zum Führen der Trennkeile (10) dienen.

3. Leiste nach Anspruch 2, dadurch gekennzeichnet, daß die als doppelt bezeichneten Trennkeile (10) jeweils einem Paar von Eingangskontakten (4) und dem gegenüberliegenden Paar von Ausgangskontakten (5) zugeordnet sind und jeweils zwei Trennarme (15, 16) aufweisen, die durch einen Träger (13) getragen sind und beiderseits des Trägers vorstehen, und daß die Führungsschlitze (11) zwischen den zwei Kontakten der verschiedenen Paare von gegenüberliegenden Kontakten zentriert sind.

4. Leiste nach Anspruch 3, dadurch gekennzeichnet, daß jeder Trennkeil (10) einen Betätigungsarm (14) umfaßt, der an dem Träger (13) vorgesehen ist und in jedem der gegenüberliegenden Führungsschlitze (11) aufgenommen ist.

5. Leiste nach Anspruch 4, dadurch gekennzeichnet, daß der Betätigungsarm (14) eines jeden Trennkeils (10) am Trennstab (3) an wenigstens einer Seite von diesem vorsteht.

6. Leiste nach einem der Ansprüche 4 und 5, dadurch gekennzeichnet, daß der Betätigungsarm (14) sich entlang eines als vorderer Rand bezeichneten Randes des Trägers (13) erstreckt, für jeden in dem Trennstab betrachteten Trennkeil (10), und auf beiden Seiten des Trägers quer zu dessen vorderem Rand vorsteht und dabei eine als Breite bezeichnete Querabmessung aufweist, die im wesentlichen gleich dem Abstand zwischen den Kontakten jedes Paars ist.

7. Leiste nach einem der Ansprüche 4 bis 6, dadurch gekennzeichnet, daß sie ferner einen Kopplungsarm (18) umfaßt, der die Trennkeile (10) miteinander verbindet und sich wenigstens teilweise am Äußeren des Trennstabs (3) erstreckt, für eine gleichzeitige Steuerung der Trennkeile.

8. Leiste nach einem der Ansprüche 3 bis 7, dadurch gekennzeichnet, daß die Trennarme (15, 16) als hinten an dem Träger (13) für jeden an dem Trennstab betrachteten Trennkeil (10) bezeichnet werden und jeweils eine als vordere bezeichnete Facette (15A, 16A) aufweisen, die eine an ihre Einführung zwischen und entlang der Verbindungs-Abschlußbereiche (4B, 5B) der Kontakte (4, 5) angepaßte Form haben.

## Claims

1. A connecting terminal strip with integral disconnection means including input and output contacts (4, 5) retained in a insulative body (1) and each having a first terminal part (4A, 5A) accessible externally on said body and a second terminal part (4B, 5B) inside said body for elastic connection of each input contact to one of the output contacts, and disconnection means (10) that can be interposed between the connecting terminal parts of the input and output contacts, characterised in that said disconnection means (10) comprise insulative disconnection wedges trapped and mobile in said body (1) and actuated from outside said body between a disconnection position in which each wedge separates and isolates the connecting terminal parts (4B, 5B) of said input and output contacts (4, 5) concerned and a non-disconnection position in which each wedge is retracted relative to the terminal parts of the input and output contacts concerned and has no effect on them.

2. A terminal strip according to claim 1 wherein said input and output contacts face each other and are disposed in two parallel rows with their first terminal part accessible on a front face of said body, characterised in that said body (1) is formed of front and rear parts (2, 3) assembled together, the front part constituting a connection strip (2) holding said input and output contacts and having a rear open junction face from which the connecting terminal parts of the contacts project and the rear part constituting a disconnection strip (3) having an open front junction face receiving said connecting terminal parts of the contacts, containing said disconnection wedges (10) and having facing slots (11), said slots being open on the front junction face of the disconnection strip and closed by the connection strip assembled to it and being assigned to guiding said disconnection wedges (10).

3. A terminal strip according to claim 2 characterised in that said disconnection wedges (10) are double wedges and each is assigned to a pair of input contacts (4) and to the facing pair of output contacts (5) and comprises two disconnection arms (15, 16) carried by a support (13) and projecting to either side of said support, and in that said guide slots (11) are centred between the two contacts of the various pairs of facing contacts.

4. A terminal strip according to claim 3 characterised in that each disconnection wedge (10) includes an actuator arm (10) on said support (13) and received in each of the facing guide slots (11).

5. A terminal strip according to claim 4 characterised in that the actuator arm (14) of each of said disconnection wedges (10) projects from the terminal strip (3) on at least one side thereof.

6. A terminal strip according to claim 4 or claim 5 characterised in that said actuator arm (14) extends along a front edge of said support (13) for each disconnection wedge (10) considered in said disconnection strip and projects on either side of said support, transversely to said front edge thereof, having a transverse dimension or width substantially equal to the distance between the contacts of each pair.

7. A terminal strip according to any one of claims 4 to 6 characterised in that it further includes a coupling arm (18) connecting said disconnection wedges (10) to each other and extending at least partly to the outside of the disconnection strip (3) for simultaneous actuation of said disconnection wedges.

8. A terminal strip according to any one of claims 3 to 7 characterised in that said disconnection arms (15, 16) are rear arms on said support (13) for each disconnection wedge (10) considered in said disconnection strip and each has a front facet (15A, 16A) having a shape adapted for their insertion between and along the connecting terminal parts (4B, 5B) of said contacts (4, 5).
